(19) Europäisches Patentamt
European Patent Office
Office européen des brevets

(11) **EP 4 016 494 A1**

(12) **EUROPEAN PATENT APPLICATION**

(43) Date of publication:
**22.06.2022 Bulletin 2022/25**

(21) Application number: **21207120.3**

(22) Date of filing: **09.11.2021**

(51) International Patent Classification (IPC):
**G08G 1/017** (2006.01)    **G08G 1/052** (2006.01)
**G08G 1/08** (2006.01)    **G08G 1/01** (2006.01)
**G08G 1/065** (2006.01)    **H04L 67/12** (2022.01)

(52) Cooperative Patent Classification (CPC):
**H04L 67/12; G08G 1/0133; G08G 1/0175;
G08G 1/052; G08G 1/065; G08G 1/08**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:    **21.12.2020    CN 202011521984**

(71) Applicant: **Apollo Intelligent Connectivity (Beijing)
Technology Co., Ltd.
Beijing 100176 (CN)**

(72) Inventor: **Gao, Xu
Beijing, 100176 (CN)**

(74) Representative: **Hoffmann Eitle
Patent- und Rechtsanwälte PartmbB
Arabellastraße 30
81925 München (DE)**

(54) **METHOD AND APPARATUS OF DETERMINING VEHICLE QUEUING INFORMATION, ROADSIDE DEVICE AND CLOUD CONTROL PLATFORM**

(57)    A method and apparatus of determining a vehicle queuing information, a roadside device and a cloud control platform are provided, which are applied to fields of intelligent transportation, computer vision and deep learning. The method includes: acquiring a plurality of images for a target lane captured at a plurality of time instants; for each image in the plurality of images, determining at least one vehicle located on the target lane and a travelling speed of each of the at least one vehicle at the time instant at which the each image is captured; determining a status information of each of the at least one vehicle at the time instant according to the travelling speed of the at least one vehicle; determining a queuing vehicle, which is located on the target lane at a first time instant of the plurality of time instants, according to all of the status information determined for the plurality of images; and determining a vehicle queuing information for the target lane at the first time instant according to the queuing vehicle.

FIG. 2

EP 4 016 494 A1

# Description

## TECHNICAL FIELD

The present disclosure relates to a field of image processing, in particular, to fields of intelligent transportation, computer vision and deep learning, and more particularly, to a method of determining a vehicle queuing information, an apparatus of determining a vehicle queuing information, a roadside device and a cloud control platform.

## BACKGROUND

With a development of information technology, managing traffic in an intelligent manner to alleviate traffic congestion and increase urban traffic efficiency has become one of the main tasks of cities at all levels. It is a basis of intelligent traffic management to estimate a vehicle queuing information, so that a solution of controlling intelligent traffic lights may be reasonably formulated.

In the related art, when estimating a vehicle queuing information, vehicles outside a monitor range of a camera cannot be taken into account. Therefore, the estimation of the queuing information may be incorrect, and the accuracy may be low

## SUMMARY

Disclosed are a method, an apparatus, a device and a storage medium of increasing accuracy of determining a vehicle queuing information.

According to a first aspect, a method of determining a vehicle queuing information is provided, the method includes: acquiring a plurality of images for a target lane captured at a plurality of time instants; for each image in the plurality of images: determining at least one vehicle located on the target lane and a travelling speed of each of the at least one vehicle at the time instant at which the each image is captured; determining a status information of each of the at least one vehicle at the time instant at which the each image is captured according to the travelling speed of the at least one vehicle; determining a queuing vehicle, which is located on the target lane at a first time instant of the plurality of time instants, according to all of the status information determined for the plurality of images; and determining a vehicle queuing information for the target lane at the first time instant according to the queuing vehicle.

According to a second aspect, an apparatus of determining a vehicle queuing information is provided, including: an image acquisition module, configured to acquire a plurality of images for a target lane captured at a plurality of time instants; a lane vehicle determination module, configured to determine, for each image in the plurality of images, at least one vehicle located on the target lane and a travelling speed of each of the at least one vehicle at the time instant at which the each image is captured; a status information determination module, configured to determine, for said each image in the plurality of images, a status information of each of the at least one vehicle at the time instant at which the each image is captured according to the travelling speed of the at least one vehicle; a queuing vehicle determination module, configured to determine a queuing vehicle, which is located on the target lane at a first time instant of the plurality of time instants, according to all of the status information determined for the plurality of images; and a queuing information determination module, configured to determine a vehicle queuing information for the target lane at the first time instant according to the queuing vehicle.

According to a third aspect, an electronic device is provided, including: at least one processor; and a memory communicatively connected to the at least one processor; wherein the memory is stored with instructions capable of being executed by the at least one processor, and the instructions are executed by the at least one processor, so that the at least one processor is capable of implementing the method of determining a vehicle queuing information in the present disclosure.

According to a fourth aspect, a roadside device is provided, including the above-mentioned electronic device.

According to a fifth aspect, a cloud control platform is provided, including the above-mentioned electronic device.

According to a six aspect, a non-transitory computer readable storage medium stored with computer instructions is provided, wherein the computer instructions are configured to allow a computer to perform the method of determining a vehicle queuing information in the present disclosure.

According to a seventh aspect, a computer program product is provided, including a computer program, wherein the computer program is configured to implement the method of determining a vehicle queuing information in the present disclosure when being executed by a processor.

It should be understood that, the content described in the part is not intended to indicate critical or important features of the embodiments of the present disclosure, and is not used to limit the scope of the present disclosure. Other features of the present disclosure will become easier to understand through the following specification.

## BRIEF DESCRIPTION OF THE DRAWINGS

The accompanying drawings are used to better understand the present disclosure, and do not limit the present disclosure, in which:

FIG. 1 is a schematic application scenario diagram of a method of determining a vehicle queuing information, an apparatus of determining a vehicle queuing information, a roadside device and a cloud control platform according to the embodiments of the present disclosure;

FIG. 2 is a schematic flowchart of a method of determining a vehicle queuing information according to the embodiments of the present disclosure;

FIG. 3 is a schematic diagram of principles of determining status information of each vehicle located on a target lane at the time instant at which the each image is captured in each image according to the embodiments of the present disclosure;

FIG. 4 is a schematic diagram of principles of determining a queuing vehicle, which is located on a target lane at a first time instant, according to the embodiments of the present disclosure;

FIG. 5 is a schematic diagram of a principles of determining queuing vehicle in all the vehicles according to the embodiments of the present disclosure;

FIG. 6 is a schematic diagram of principles of a method of determining a vehicle queuing information according to the embodiments of the present disclosure;

FIG. 7 is a structural block diagram of an apparatus of determining a vehicle queuing information according to the embodiments of the present disclosure; and

FIG. 8 is a block diagram of an electronic device for implementing a method of determining a vehicle queuing information according to the embodiments of the present disclosure.

DETAILED DESCRIPTION OF EMBODIMENTS

In the following, exemplary embodiments of the present disclosure will be described with reference to the drawings, various details of the present disclosure are included here so as to facilitate understanding, and it should be noted that they are merely illustrative. Therefore, those of ordinary skill in the art should note that, various changes and modifications may be made to the embodiments described here without departing from the scope and the spirit of the present disclosure. For clarity and explicitness, descriptions of well-known functions and structures are omitted below

According to the present disclosure a method of determining a vehicle queuing information is provided. The method first acquires a plurality of images for a target lane captured at a plurality of time instants. After that, for each image in the plurality of images: at least one vehicle located on the target lane and travelling speed of the at least one vehicle at the time instant at which the each image is captured are determined first, and then status information of the at least one vehicle at the time instant at which the each image is captured is determined. Then, according to all of the status information determined for the plurality of images, a queuing vehicle, which is located on the target lane at a first time instant in a plurality of time instants, is determined. At last, a vehicle queuing information for the target lane at the first time instant is determined.

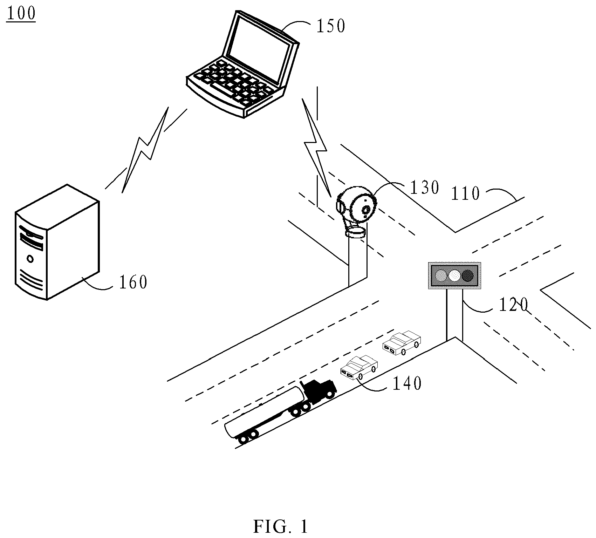

In the following, referring to FIG. 1, application scenarios of a method and an apparatus of the present disclosure is described.

FIG. 1 is a diagram of an application scenario of a method of determining a vehicle queuing information, an apparatus of determining a vehicle queuing information, a roadside device and a cloud control platform according to the embodiments of the present disclosure.

As shown in FIG. 1, the application scenario 100 of the embodiments may include a road 110, a traffic signal light 120, a monitor device 130 and a vehicle 140 travelling on the road.

The monitor device 130 may be, for example, a camera, etc. which is used to monitor the vehicle 140 travelling on the road 110. The monitor device 130 may be, for example, disposed on a road intersection where a traffic signal light 120 is provided, so as to monitor congestion information of the road intersection. The traffic signal light 120 may be, for example, a motor vehicle signal light, which is used to provide a command signal to a travel of vehicles on a plurality of lanes at the road intersection. Types of the vehicle 140 may include, for example, at least one of a car, a truck, a passenger car, a trailer and the like.

According to the embodiments of the present disclosure, as shown in FIG. 1, the application scenario 100 of the embodiments may further include, for example, a terminal device 150. The terminal device 150 may be for example, communicated with the monitor device 130 via network to acquire images continuously captured by the monitor device 130.

Exemplarily, the terminal device 150 may be, for example, various electronic devices with processing functions, including but not limited to a laptop portable computer, a desktop computer, a server, etc. The terminal device may be, for example, installed with client applications such as instant messaging applications and the like. The terminal device 150 may acquire a vehicle queuing information of any lane constituting the road intersection by processing the acquired images.

In some embodiments, the terminal device 150 may be, for example, used as a roadside device on both sides of the lane, or may be provided at any azimuth angle of the road intersection. In some embodiments, the terminal device 150 may be, for example, integrated with the monitor device 130.

In some embodiments, the terminal device 150 may further be, for example, communicated with the traffic signal light 120 via network, to adjust a timing solution of the traffic signal light 120 according to the queuing information acquired. Thus, the adjusted timing solution may better meet driving requirements of the vehicles on the road, and the road congestion may be effectively alleviated.

According to the embodiments of the present disclosure, as shown in FIG. 1, the application scenario 100 of the embodiments may, for example, further include a server 160. The server 160 may be communicated with the terminal device 150 via network. The server 160 may be, for example, a server providing various services, for example, the server may be a background management server (only as an example) that provides support for an operation of client applications in the terminal device 150. The server 160 may be, for example, an application server, a server of distributed system, or a server combined with a blockchain. Alternatively, the server may further be a virtual server or a cloud server and the like.

In some embodiments, the terminal device 150 may, for example, transmit the images acquired to the server 160, and the images are processed by the sever to obtain a vehicle queuing information on any lane constituting the road intersection. The terminal device 150 may formulate a timing solution of the traffic signal light 120 according to the feedback queuing information of the server 160, so that a periodic change of the traffic signal light 120 may better meet driving requirements of the vehicles on the road.

It should be noted that, the method of determining a vehicle queuing information according to the embodiments of the present disclosure may generally be performed by the terminal device 150, or may be performed by the server 160. Correspondingly, the apparatus of determining a vehicle queuing information according to the embodiments of the present disclosure may generally be provided in the terminal device 150, or may be provided in the sever 160.

It should be understood that, the type and the number of the road, the monitor device, the traffic signal light, the vehicle, the terminal device and the server in FIG. 1 are only illustrative. According to actual needs, any type and any number of roads, monitor devices, traffic signal lights, vehicles, terminal devices and servers may be provided.

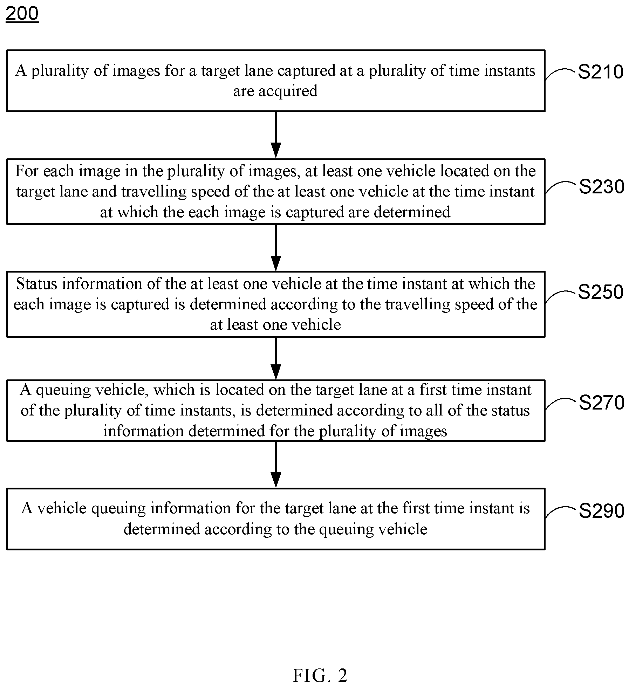

In the following, in combination with the application scenario described in FIG. 1, the method of determining a vehicle queuing information according to the embodiments will be described in detail with reference to FIGS. 2-6.

FIG. 2 is a schematic flowchart of a method of determining a vehicle queuing information according to the embodiments of the present disclosure.

As shown in FIG. 2, the method 200 of determining a vehicle queuing information of the embodiments may, for example, include operations S210, S230, S250, S270 and S290.

In operation S210, a plurality of images for a target lane captured at a plurality of time instants are acquired.

According to the embodiments of the present disclosure, the operation S210 may acquire a plurality of images continuously captured during a predetermined period by the monitor device with a monitor range including the target lane. The predetermined period may be, for example, determined according to a change period of a traffic signal light which provides command signals to the target lane. For example, the predetermined period may be, for example, any change period of the traffic signal light. Alternatively, according to a capturing frequency of the monitor device, one image is extracted every predetermined number of images from the plurality of images acquired by the monitor device in the change period of the traffic signal light, and the extracted images are finally used as the plurality of images for the target lane captured at the plurality of time instants.

According to the embodiments of the present disclosure, when acquiring the images, for example, a time instant at which the traffic signal light turns from red to green may be used as a starting time instant, to acquire a plurality of images captured in a predetermined period by the monitor device. A length of the predetermined period may be smaller than or equal to a length of a period during which the traffic light is continuously green.

According to the embodiments of the present disclosure, the target lane may be, for example, any one of a left-turn lane, a straight lane, a right-turn lane, a left-turn and straight lane, and a right-turn and straight lane.

In operation S230, for each image in the plurality of images, at least one vehicle located on the target lane and travelling speed of the at least one vehicle at the time instant at which the each image is captured are determined.

According to the embodiments of the present disclosure, after the plurality of images are acquired, image recognition may be performed on each image to identify the vehicles located on the target lane in each image. When other lanes in addition to the target lane are included in each image, for example, the target lane may be determined first by identifying dividing lines between the lanes, indicator signs on the lanes. Then the vehicles on the target lane are identified.

Exemplarily, each image may be used as an input of a convolutional neural network, and central positional coordinates, a height and a width of at least one rectangular frame marked in each image are output and acquired. Each rectangular frame corresponds to a vehicle located on the target lane. It should be understood that, the above method of determining at least one vehicle located on the target lane is merely an example which facilitates the understanding of the present disclosure, and the present disclosure does not limit to this.

Exemplarily, after the at least one vehicle is determined for each image, for example, a first rectangular frame acquired for each image may be feature-matched with a second rectangular frame to acquire the first rectangular frame and the second rectangular frame delineating the same vehicle. The second rectangular frame is a rectangular frame acquired from an image previously captured at a time instant adjacent to the time instant at which the each image is captured. After that, a travelling speed of the same vehicle delineated is determined according to a difference between coordinate values of central positions of the first rectangular frame and the second rectangular frame and a difference between time instants at which the each image and the image previously adjacent to the each image are captured.

Exemplarily, for a certain vehicle delineated by the rectangular frame in each image, if a matched rectangular frame is not found in the previous image of the each image, it may be determined that the certain vehicle has just entered a monitor range of the monitor device. In this case, a travelling speed of the certain vehicle may be set as a predetermined value, which may be adjusted according to actual needs. For example, the predetermined value may be 0, or may be a value less than 10km/h, etc., and the present disclosure does not limit the value of the predetermined value.

In operation S250, status information of the at least one vehicle at the time instant at which the each image is captured is determined according to the travelling speed of the at least one vehicle.

According to the embodiments of the present disclosure, a speed threshold may be provided in advance. For each image, if the travelling speed of the vehicle located on the target lane is less than the speed threshold, the status information of the vehicle at the time instant at which the each image is captured is determined as being in a stationary state. Otherwise, the status information of the vehicle at the time instant at which the each image is captured is determined as being in a travelling state.

According to the embodiments of the present disclosure, the status information determined by comparing the travelling speed of the vehicle with the speed threshold may be initial status information. Then, initial status information of a plurality of vehicles located on the target lane in each image is compared. If the initial status information of a plurality of vehicles in front of a certain vehicle are all in the travelling state, and the initial status information of the certain vehicle is in the stationary state, then the status information of the certain vehicle is determined as being in the travelling state. In this way, a vehicle stopped due to special reasons may be prevented from interfering the determination of the vehicle queuing information, and an accuracy of a final vehicle queuing information determined may be increased.

In operation S270, a queuing vehicle, which is located on the target lane at a first time instant of the plurality of time instants, is determined according to all of the status information determined for the plurality of images.

According to the embodiments of the present disclosure, operations S230 and S250 are performed on each image, so that the status information of all the vehicles located on the target lane at the time instant at which the each image is captured may be acquired.

According to the embodiments of the present disclosure, for a vehicle stopped on the target lane due to queuing, there may be a case where the vehicle stopped on the target lane due to queuing is included in at least two adjacent time instants in the plurality of time instants. Correspondingly, at least two status information for one vehicle will be included in all of the status information determined according to the plurality of images. In this case, in the embodiments, all of the status information may be grouped first according to vehicles to acquire a plurality of sets of status information, and each set of status information is for one vehicle. After that, according to the set of status information for each vehicle, it is determined whether each vehicle is a queuing vehicle, which is located on the target lane at a first time instant of the plurality of time instants.

Exemplarily, if there are at least two status information in the set of status information, then the at least two status information may be sorted in a chronological order according to a time instant of each of the at least two status information. If a first m (m is an integer greater than or equal to 2) status information of the sorted status information are in the stationary state, a vehicle corresponding to the set of status information is determined as the queuing vehicle.

Exemplarily, the above-mentioned vehicle corresponding to the set of status information in which the first m status information are in the stationary state is used as a candidate queuing vehicle. Finally, all the vehicles are sorted in the chronological order according to their first appearance time instants in the plurality of time instants. If n vehicles in all the sorted vehicles adjacent to the candidate queuing vehicle are not candidate queuing vehicles, the candidate queuing vehicle is determined as not a queuing vehicle at the first time instant. By analogy, it is determined whether each vehicle in the candidate queuing vehicles is a queuing vehicle, and finally, queuing vehicles on the target lane at the first time instant may be acquired.

It should be understood that, the method of determining whether the vehicle is the queuing vehicle of the embodiments is only used as an example to facilitate the understanding of the present disclosure, and the present disclosure does not limit to this.

According to the embodiments of the present disclosure, a time interval between two adjacent time instants of the plurality of time instants should be smaller than a time required for a vehicle travelling at a predetermined speed from entering a monitor range of the monitor device to leaving the monitor range of the monitor device. The first time instant of the plurality of time instants may be a time instant at which the traffic signal light turns from red to green, that is, a time instant at which the target lane turns from a vehicle-passing forbidden state to a vehicle-passing state.

In operation S290, a vehicle queuing information for the target lane at the first time instant is determined according to the queuing vehicle.

According to the embodiments of the present disclosure, after the queuing vehicles are determined, a product of the number of the queuing vehicles and a predetermined length may be used as the vehicle queuing information for the target lane at the first time instant. The predetermined length may be, for example, provided according to types of the vehicles travelling on the road, a proportion of each type of vehicle in all the vehicles and a vehicle body length of each type of vehicle.

According to the embodiments of the present disclosure, by first determining status information of the vehicles in a plurality of images captured at a plurality of time instants, and then determining the queuing vehicle according to all of the status information for the plurality of images acquired, the monitor to the status of the vehicle outside the monitor range of the camera at the first time instant may be achieved, thereby the accuracy of the determined vehicle queuing information may be increased.

According to the embodiments of the present disclosure, the time interval between the first time instant and a second time instant in the plurality of time instants is associated with a change period of the traffic signal light for the target lane. The second time instant may be, for example, the latest time instant of the plurality of time instants. The time interval between the first time instant and the second time instant may be, for example, equal to the change period of the traffic signal light. Alternatively, the time interval between the first time instant and the second time instant may be, for example, equal to a duration of the green light of the traffic signal light.

According to the embodiments of the present disclosure, when acquiring images captured at the plurality of time instants, for example, the time interval between the first time instant and the second time instant may be flexibly adjusted according to road condition of the target lane. For example, when the congestion of the target lane is severe, the time interval between the first time instant and the second time instant may be set to be a relatively large value. When the target lane is running smoothly, the time interval between the first time instant and the second time instant may be set to be a relatively small value. Through such arrangements, when the target lane is congested severely and the queuing vehicles do not travel forward for a long time, the case where the queuing vehicles are difficult to be precisely determined due to the relatively small time interval may be prevented, and the accuracy of the determined vehicle queuing information may be further increased.

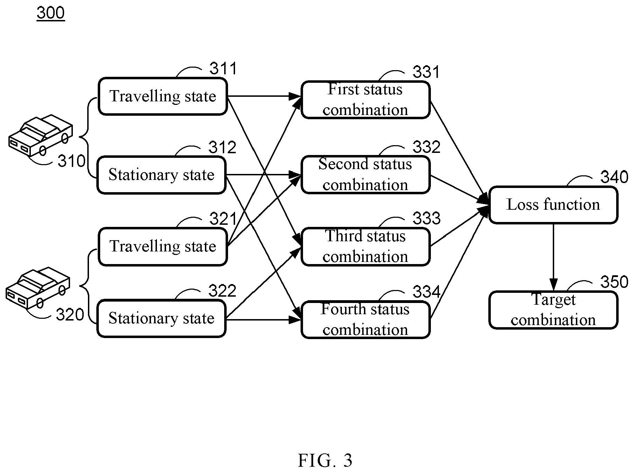

FIG. 3 is a schematic diagram of principles of determining status information of each vehicle located on a target lane at the time instant at which the each image is captured in each image according to the embodiments of the present disclosure.

According to the embodiments of the present disclosure, when determining status information of at least one vehicle at the time instant at which the each image is captured, for example, for each image, a minimum value of a loss function associated with vehicle travelling speed is determined in combination with travelling speeds of all the vehicles on the target lane in each image. Finally, the status information of each vehicle corresponding to the minimum value of the loss function is the status information of each vehicle at the time instant at which the each image is captured. Through the introduction of the loss function, the accuracy of the determined status information of the vehicles may be increased to a certain extent.

Exemplarily, the status information of the vehicle may be represented by a predetermined value. For example, if the status information is the travelling state, the predetermined value representing the status information may be a first value; and if the status information is the stationary state, the predetermined value representing the status information may be a second value. When determining the status information, for each image, status combinations of all the vehicles on the target lane in the image may be determined to acquire at least two status combinations. Each status combination includes a status of each of the at least one vehicle. After the at least two status combinations are acquired, according to the travelling speed of each of the at least one vehicle at the time instant at which the each image is captured, a target combination minimizing the value of the predetermined loss function in at least one status combination is determined, so as to acquire the status information of each of the at least one vehicle at the time instant at which the each image is captured.

Exemplarily, in the embodiment 300 shown in FIG. 3, when a vehicle 310 and a vehicle 320 are included on the target lane, status information of the vehicle 310 may be a travelling state 311 or a stationary state 312; and similarly, status information of the vehicle 320 may be a travelling state 321 or a stationary state 322. When determining the status combination, a first status combination 331 composed of the travelling state 311 and the travelling state 321, a second status combination 332 composed of the stationary state 312 and the travelling state 321, a third status combination 333 composed of the travelling state 311 and the stationary state 322 and a fourth status combination 334 composed of the stationary state 312 and the stationary state 322 may be acquired. It should be understood that, the number of the status combinations may be determined according to the number of vehicles on the target lane. For example, a relationship between the number S of status combinations and the number p of vehicles is: S is equal to the $p_{th}$ power of 2. After the four status combinations are acquired, a numerical string representing each status information in the first status combination 331, the travelling speed of the vehicle 310 at the time instant at which the image is captured and the travelling speed of the vehicle 320 at the time instant at which the image is captured may be substituted into a predetermined loss function 340 to calculate and acquire a first value of the predetermined loss function 340. Similarly, by substituting a numerical string representing each status information in the second status combination 332, a numerical string representing each status information in the third status combination 333 and a numerical string representing each status information in the fourth status combination 334 into the predetermined loss function 340 in sequence, a second value, a third value and a fourth value of the predetermined loss function 340 may be acquired. Then, a minimum value of the first value, the second value, the third value and the fourth value is determined, and the status combination substituted to acquire the minimum value is used as a final target combination 350.

Exemplarily, the predetermined loss function may be represented by the following formula:

$$\widetilde{A_t} = \sum_{i=0}^{N_t} \left[ (Q - a_t^i) \cdot v_t^i + a_t^i \cdot \tau \right].$$

$\widetilde{A_t}$ is the value of the predetermined loss function, $a_t^i$ represents a value of a status information of an $i_{th}$ vehicle in the at least one vehicle located on the target lane at a time instant at which a $t_{th}$ image in the plurality of images is captured; $v_t^i$ represents a travelling speed of the $i_{th}$ vehicle at the time instant at which the $t_{th}$ image is captured; Q and $\tau$ are constants, $N_t$ is a total number of the vehicles located on the target lane in the $t_{th}$ image. If the status information is the travelling state, the value of the status information is Q, and if the status information is the stationary state, the value of the status information is 0. Exemplarily, Q and $\tau$ may be hyper-parameters, values of the hyper-parameters may be set according to actual needs, and the present disclosure do not limit to this. In some embodiments, the value of Q may be 1.

Exemplarily, the predetermined loss function may be represented by the following formula:

$$\widetilde{A_t} = \sum_{i=0}^{N_t} \left[ \left| v_t^i - v_0 \right| f(a_t^i) \right].$$

$v_0$ is a predetermined speed threshold, $f(a_t^i)$ is a piecewise function, and if $v_t^i \geq v_0$, then $f(a_t^i) = (Q - a_t^i)$, otherwise, $f(a_t^i) = a_t^i$.

It should be understood that, the predetermined loss function in the above-mentioned embodiments is merely used as an example to facilitate the understanding of the present disclosure, and the present disclosure does not limit to this. According to actual needs, the predetermined loss function may be any function, or may be any variations of the loss function listed above.

According to the embodiments of the present disclosure, after the target combination is acquired, for example, a smoothing process may be performed on the numerical string representing the status information in the target combination, so that the status information after the smoothing process is more attached to actual conditions, and therefore, the accuracy of the determined queuing vehicle and vehicle queuing information is increased.

Exemplarily, an abnormal vehicle in the at least one vehicle located on the target lane in each image is determined first according to the target combination. The abnormal vehicle is a vehicle whose status information is different from status information of a first predetermined number of adjacent vehicles. After that, the status information of the abnormal vehicle is changed, so that the changed status information of the abnormal vehicle is the same as the status information of the first predetermined number of adjacent vehicles.

In some embodiments, each status information in the target combination may be sorted according to a sequence order on the target lane of the corresponding vehicles. After that, the status information in the sorted status information that is inconsistent with the status information of the first predetermined number of adjacent vehicles is determined. Finally, the inconsistent status information is determined as the abnormal vehicle.

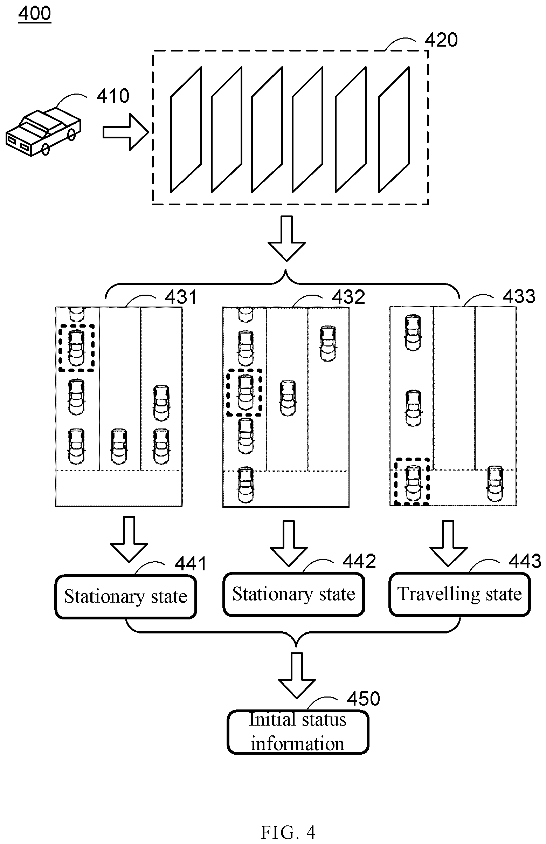

FIG. 4 is a schematic diagram of principles of determining a queuing vehicle, which is located on the target lane at the first time instant according to the embodiments of the present disclosure.

According to the embodiments of the present disclosure, after acquiring the target combinations for all the images, for example, status information corresponding to the same vehicle in all the target combinations is summarized to acquire a status information sequence corresponding to each vehicle. After that, the initial status information of each vehicle is determined according to the status information sequence. Finally, the queuing vehicle is determined according to the initial status information of all the vehicles. In this way, the determination of the status information of the vehicle captures a plurality of images into account, and thereby the accuracy of the determined vehicle status information is increased.

Exemplarily, in the embodiment 400 shown in FIG. 4, for each vehicle, at least one image including the vehicle is determined in a plurality of images first as the target image for the vehicle. For example, for a vehicle 410, target images 431-433 are extracted from a plurality of images 420, and the target images 431-433 are arranged in the chronological order according to the time instants at which the images are captured. In these target images 431-433, a vehicle enclosed by dashed boxes is the vehicle 410. Then, the status information of each vehicle at the first time instant is determined as the initial status information, according to the status information of each vehicle determined for the target image. Finally, the queuing vehicle in all the vehicles is determined according to the initial status information of all the vehicles located on the target lane in the plurality of images.

Exemplarily, when determining the initial status information of each vehicle, for example, in a case where there are a plurality of target images for each vehicle, a status information with a larger amount (in a plurality of status information of each vehicle determined for the target images) is determined as the status information of each vehicle at the first time instant. In this way, the smoothing process for the status information determined for the plurality of target images may be achieved. Therefore, the accuracy of the determined vehicle status information may be increased to a certain extent, and thereby the accuracy of the determined queuing information is increased. For example, the status information of the vehicle 410 determined for the target image 431 is a stationary state 441, the status information of the vehicle 410 determined for the target image 432 is a stationary state 442, and the status information of the vehicle 410 determined for the target image 433 is a travelling state 443, the initial status information 450 is determined as the stationary state.

Exemplarily, when the initial status information of each vehicle is determined, for example, the plurality of status information determined according to the plurality of target images may further be sorted in the chronological order based on time instants at which the corresponding target images are captured. Then, according to the sorted plurality of status information, the consistency of the first m status information is determined. If the first m status information is consistent, the consistent status information is determined as the initial status information; otherwise, the initial status information of the vehicle is determined as the travelling state.

According to the embodiments of the present disclosure, after the initial status information of all the vehicles are acquired, a vehicle with the initial status information being the stationary state may be determined as the queuing vehicle at the first time instant.

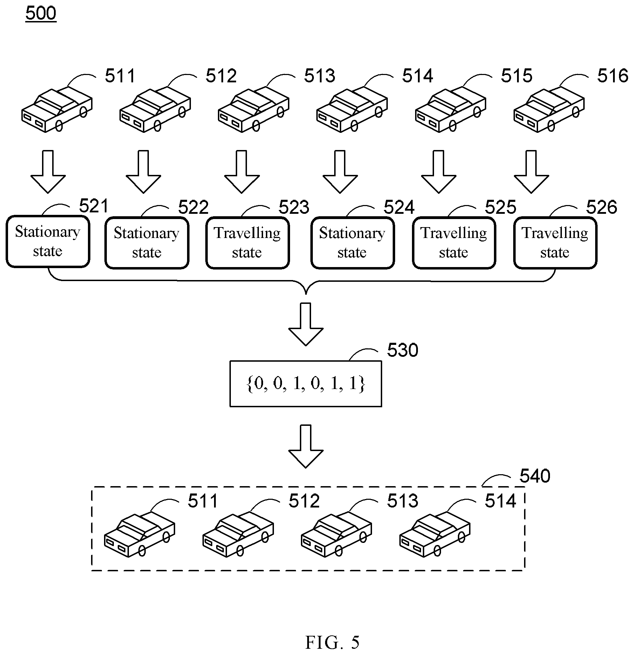

FIG. 5 is a schematic diagram of principles of determining the queuing vehicle in all the vehicles according to the embodiments of the present disclosure.

According to the embodiments of the present disclosure, after the initial status information of all the vehicles are acquired, according to the time instants at which the plurality of images are captured, a time order of appearances of all the vehicles located on the target lane in the plurality of images is determined first. After that, the initial status information of all the vehicles is sorted in the chronological order according to the time order, to acquire a status information sequence. Finally, in a case where the status sequence includes a second predetermined number of consecutive travelling states, a vehicle corresponding to initial status information previous to the second predetermined number of consecutive travelling states is determined as the queuing vehicle.

Exemplarily, an average value of the plurality of time instants for the plurality of target images of the vehicle may be determined as an appearance time instant of the vehicle. Alternatively, an image of the plurality of target images captured earliest may be determined first, and the earliest time instant is determined as the appearance time instant of the vehicle. In this case, if appearance time instants of a plurality of vehicles are the same, rectangular frames acquired via image recognition may be compared, and a vehicle delineated by a larger rectangular frame is set to be the vehicle that appears earlier.

Exemplarily, in the embodiment 500 shown in FIG. 5, the vehicles located on the target lane in a plurality of images include 6 vehicles. The 6 vehicles are sorted according to their appearance order, including vehicles 511-516. After sorting the status information of the vehicles 511-516 according to the appearance order of the corresponding vehicles, a status information sequence {stationary state 521, stationary state 522, travelling state 523, stationary state 524, travelling state 525, travelling state 526} may be acquired. The status information sequence is represented by numerical values, and a numerical string {0, 0, 1, 0, 1, 1} may be obtained. In a case where the second predetermined number is 1, the vehicles corresponding to the stationary state 521 and the stationary state 522, that is, the vehicles 511 and 512 may be determined as the queuing vehicles. In a case where the second predetermined number is 2, the vehicles corresponding to the stationary state 521, the stationary state 522, the travelling state 523 and the stationary state 524, that is, the vehicles 511, 512, 513 and 514 may be determined as the queuing vehicles 540.

It should be understood that, the second predetermined number may be set according to actual needs, and the present disclosure does not limit to this. In some embodiments, in the queuing state, some certain vehicles occupy a non-motorized lane or lanes on both sides of the target lane and drive into the target lane again after overtaking, which could lead to an incorrect status information acquired from the vehicle due to a relatively large vehicle speed, In order to avoid this case, in the embodiments, the second predetermined number may be set as a numerical value greater than 2.

According to the embodiments of the present disclosure, after the queuing vehicles are acquired, for example, a vehicle body length of each vehicle in the queuing vehicles may be determined first. Then, a vehicle queuing length on the target lane at the first time instant may be determined according to the vehicle body length of each vehicle, and the vehicle queuing length is used as the vehicle queuing information.

Exemplarily, when determining the body length of each vehicle in the queuing vehicles, a predetermined classification model may be used first to determine the type of each vehicle. Then, the vehicle body length of each vehicle is determined according to a pre-established reference table for vehicle types and vehicle body lengths. The predetermined classification model may be, for example, a logistic regression neural network model, etc. Considering that there should be a certain distance between the vehicles, in the pre-established reference table, the vehicle body length may be assigned a value larger than an actual vehicle body length. After the vehicle body length of each vehicle is acquired, a sum of the vehicle body lengths of all the queuing vehicles may be determined as the vehicle queuing length.

According to the embodiments of the present disclosure, after the queuing vehicles are acquired, for example, the vehicle body length of each vehicle may be determined first. Then, the vehicle queuing length on the target lane at the first time instant may be determined according to the vehicle body length of each vehicle and a predetermined vehicle distance, and the vehicle queuing length is used as the vehicle queuing information. The method of determining the vehicle body length of the vehicle in the embodiments is similar to that in the aforementioned embodiments. After the vehicle body length of each vehicle is acquired, the sum of the vehicle body length of each vehicle and the product of the predetermined distance and the number of queuing vehicles are determined first, and finally, a sum of the sum of the vehicle body lengths and the product is used as the vehicle queuing length.

In the embodiments, compared to the existing art that the queuing length is determined only according to a position of a last queuing vehicle, the vehicle queuing length is determined according to the vehicle body length of each vehicle in the queuing vehicles. Thus, the problem that the queuing length may be incorrect due to an inaccurate positioning of the last queuing vehicle may be avoided, and the accuracy of the determined queuing length may be increased.

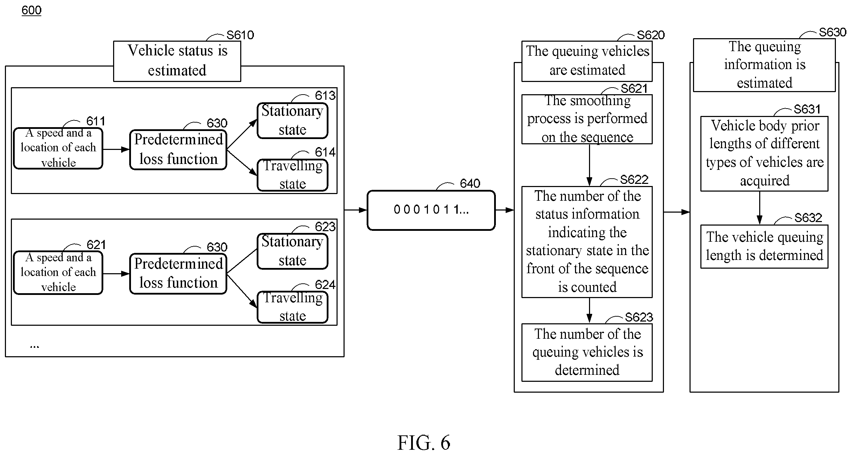

FIG. 6 is a schematic diagram of principles of a method of determining a vehicle queuing information according to the embodiments of the present disclosure.

According to the embodiments of the present disclosure, as shown in FIG. 6, the method 600 of determining a vehicle queuing information of the embodiments includes operations S610-S630.

In operation S610, vehicle status is estimated. In the operation S610, a first image of the plurality of images acquired may be identified first, and a speed and a location 611 of each vehicle located on the target lane in the first image is acquired. A second image of the plurality of images acquired is identified, a speed and a location 621 of each vehicle located on the target lane in the second image is acquired. In analogy, the speed and the location of each vehicle in each image of the plurality of images may be acquired. Then, the speed and all of the status information of each vehicle in the first image are substituted into a predetermined loss function 630 to determine a numerical value of the status information of each vehicle in the first image as 0 indicating the stationary state 613, or 1 indicating the travelling state 614. Similarly, through the predetermined loss function 630, the numerical value of the status information of each vehicle in the second image may be determined as 0 indicating the stationary state 623, or 1 indicating the travelling state 624. In analogy, numerical values indicating the status information of each vehicle included in each image may be acquired for each image, thereby a numerical value sequence 640 indicating the status information of each vehicle included in each image may be acquired for each image.

In operation S620, the queuing vehicles are estimated. The operation may, for example, include operations S621-S623. In operation S621, the smoothing process is performed on the numerical value sequence 640 for each image to acquire an adjusted numerical value sequence. Initial status information of each vehicle at the first time instant is determined according to a plurality of numerical value sequences 640, the numerical values indicating the initial status information of each vehicle are sorted according to an appearance order of each vehicle in the monitor range of the monitor device, and a numerical value sequence for the status information of all the vehicles is acquired. In operation S622, the number of the status information indicating the stationary state in the front of the numerical value sequence for the status information of all the vehicles is counted. In operation S623, the vehicles corresponding to the status information in the front of the numerical value sequence indicating the stationary state are determined as the queuing vehicles, thereby the number of the queuing vehicles is determined.

In operation S630, the queuing information is estimated. The operation S630 may include operations S631-S632. In operation S631, after the queuing vehicles are acquired, vehicle body prior lengths of different types of vehicles are acquired. Then, operation S632 is performed to determine the vehicle body length of each vehicle in the queuing vehicles according to the vehicle body prior lengths of the different types of vehicles, and the vehicle queuing length is determined according to the vehicle body length of each vehicle. The vehicle queuing length may be used as the vehicle queuing information, and the vehicle queuing information is used as a reference to develop principles of the change of traffic signal light.

The method of determining a vehicle queuing information in the embodiments determines the queuing information according to a plurality of images captured at a plurality of time instants, time information is used to acquire more spatial information, the number of vehicles on the target lane sensed by the monitor device is increased, which may facilitate the improvement of the accuracy of the determined vehicle queuing information. On this basis, the control of the traffic signal light may be effectively planned. After testing, the method may reduce an error rate of the determined queuing length by about 14%.

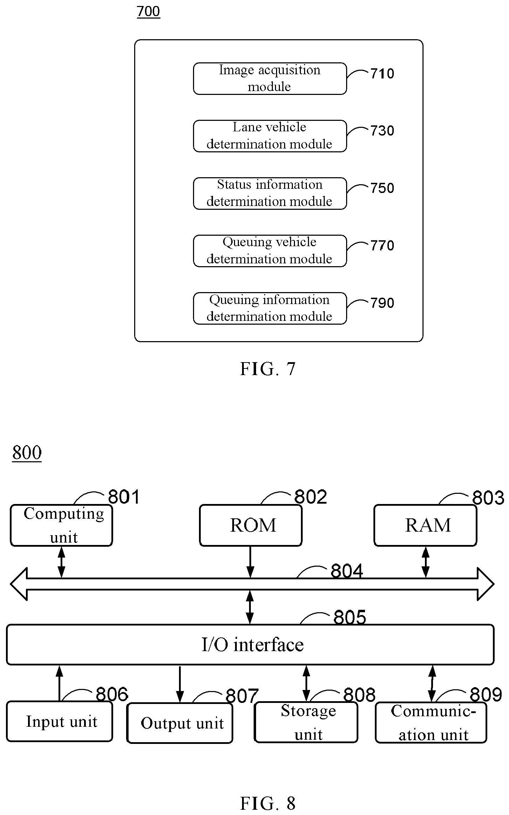

FIG. 7 is a structural block diagram of an apparatus of determining a vehicle queuing information according to the embodiments of the present disclosure.

As shown in FIG. 7, the apparatus 700 of determining a vehicle queuing information in the embodiments may include an image acquisition module 710, a lane vehicle determination module 730, a status information determination module 750, a queuing vehicle determination module 770 and a queuing information determination module 790.

The image acquisition module 710 is used to acquire a plurality of images for a target lane captured at a plurality of time instants. In some embodiments, the image acquisition module 710 may be, for example, used to perform the above-mentioned operation S210, which will not be repeated here.

The lane vehicle determination module 730 is used to determine, for each image in the plurality of images, at least one vehicle located on the target lane and a travelling speed of each of the at least one vehicle at the time instant at which the each image is captured. In some embodiments, the lane vehicle determination module 730 may be, for example, used to perform the above-mentioned operation S230, which will not be repeated here.

The status information determination module 750 is used to determine, for said each image in the plurality of images, a status information of each of the at least one vehicle at the time instant at which the each image is captured according to the travelling speed of the at least one vehicle. In some embodiments, the status information determination module 750 may be, for example, used to perform the above-mentioned operation S250, which will not be repeated here.

The queuing vehicle determination module 770 is used to determine a queuing vehicle, which is located on the target lane at a first time instant of the plurality of time instants, according to all of the status information determined for the plurality of images. In some embodiments, the queuing vehicle determination module 770 may be, for example, used to perform the above-mentioned operation S270, which will not be repeated here.

The queuing information determination module 790 is used to determine a vehicle queuing information for the target lane at the first time instant according to the queuing vehicle. In some embodiments, the queuing information determination module 790 may be, for example, used to perform the above-mentioned operation S290, which will not be repeated here.

According to the embodiments of the present disclosure, the status information determination module 750 may, for example, include a status combination determination sub-module and a target combination determination sub-module. The status combination determination sub-module is used to determine at least two status combinations for the at least one vehicle, and each of the at least two status combinations includes a status of each of the at least one vehicle, and the status of the at least one vehicle includes a stationary state and a travelling state. The target combination determination sub-module is used to determine a target combination minimizing a value of a predetermined loss function in the at least one status combination according to the travelling speed of each of the at least one vehicle at the time instant at which the each image is captured, to acquire the status information of each of the at least one vehicle at the time instant at which the each image is captured.

According to the embodiments of the present disclosure, the status information determination module further includes an abnormal vehicle determination sub-module and a status information adjusting sub-module. The abnormal vehicle determination sub-module is used to determine an abnormal vehicle in the at least one vehicle according to the target combination, and the abnormal vehicle includes a vehicle whose status information is different from status information of a first predetermined number of adjacent vehicles. The status information adjusting sub-module is used to adjust the status information of the abnormal vehicle, so that an adjusted status information of the abnormal vehicle is the same as the status information of the first predetermined number of adjacent vehicles.

According to the embodiments of the present disclosure, the above-mentioned loss function is:

$$\widetilde{A_t} = \sum_{i=0}^{N_t} \left[ (Q - a_t^i) \cdot v_t^i + a_t^i \cdot \tau \right].$$

$\widetilde{A_t}$ is the value of the predetermined loss function, $a_t^i$ represents a value of a status information of an $i_{th}$ vehicle in the at least one vehicle located on the target lane at a time instant at which a $t_{th}$ image in the plurality of images is captured; $v_t^i$ represents a travelling speed of the $i_{th}$ vehicle at the time instant at which the $t_{th}$ image in the plurality of images is captured; Q and $\tau$ are constants, $N_t$ is a total number of the vehicles located on the target lane in the $t_{th}$ image. The value of the status information includes Q indicating the traveling state and 0 indicating the stationary state.

According to the embodiments of the present disclosure, the queuing vehicle determination module includes a target image determination sub-module, an initial status determination sub-module and a vehicle determination sub-module. The target image determination sub-module is used to determine, in the plurality of images, at least one image including each vehicle as a target image for said each vehicle. The initial status determination sub-module is used to determine a status information of said each vehicle at the first time instant as an initial status information according to the status information of said each vehicle determined for the target image. The vehicle determination sub-module is used to determine the queuing vehicle in all vehicles located on the target lane in the plurality of images according to initial status information of all the vehicles.

According to the embodiments of the present disclosure, the initial status determination sub-module is used to: determine, in a case where there are a plurality of target images for said each vehicle, a status information with a larger amount in a plurality of status information of said each vehicle determined for the target images as the status information of said each vehicle at the first time instant.

According to the embodiments of the present disclosure, a status of the vehicle includes the stationary state and the travelling state. The vehicle determination sub-module includes a sequence determination unit, a status determination unit and a vehicle determination unit. The sequence determination unit is used to determine a time order of appearances of all the vehicles located on the target lane in the plurality of images according to the time instants at which the plurality of images are captured. The status determination unit is used to sort the initial status information of all the vehicles in a chronological order according to the time order to acquire a status information sequence. The vehicle determination unit is used to determine, in a case where the status information sequence includes a second predetermined number of continuous travelling states, a vehicle corresponding to the initial status information previous to the second predetermined number of consecutive travelling states in the status information sequence as the queuing vehicle.

According to the embodiments of the present disclosure, a time interval between the first time instant and a second time instant in the plurality of time instants is associated with a change period of a traffic signal light for the target lane and a road condition of the target lane.

According to the embodiments of the present disclosure, the queuing information determination module includes a vehicle body length determination sub-module and a queuing length determination sub-module. The vehicle body length determination sub-module is used to determine a vehicle body length of each vehicle in the queuing vehicles. The queuing length determination sub-module is used to determine a vehicle queuing length on the target lane at the first time instant according to the vehicle body length of said each queuing vehicle and a predetermined vehicle distance, as the vehicle queuing information.

According to the embodiments of the present disclosure, the present disclosure further provides an electronic device, a readable storage medium and a computer program product.

FIG. 8 illustrates a schematic block diagram of an exemplary electronic device 800 for implementing the embodiments of the present disclosure. The electronic device is intended to represent digital computers of various forms, for example, laptop computers, desktop computers, workstations, personal digital assistants, servers, blade servers, mainframe computers, and other suitable computers. The electronic device may also represent various forms of mobile devices, such as personal digital processing, cellular phones, smart phones, wearable devices, and other similar computing devices. The components, their connections and relationships, and their functions shown herein are merely examples, and are not intended to limit the implementation of the present disclosure described and/or required herein.

As shown in FIG. 8, the device 800 includes a computing unit 801, the computing unit may perform various suitable operations and processing according to computer programs stored in a ROM 802 or computer programs loaded from a storage unit 808 to a RAM 803. In the RAM 803, various programs and data needed for the operation of the device 800 may also be stored. The computing unit 801, ROM 802 and RAM 803 are connected to each other through a bus 804. Input/output (I/O) interface 805 is also connected to the bus 804.

A plurality of components in the device 800 are connected to the I/O interface 805, including: an input unit 806 such as a keyboard, a mouth, etc.; an output unit 807 such as a display of various types, a loudspeaker, etc.; a storage unit 808 such as a disk, an optical disk, etc.; and a communication unit 809 such as a network card, a modem, a wireless communication transceiver, etc. The communication unit 809 allows the device 800 to exchange information/data with other devices through a computer network such as Internet and/or various telecommunication networks.

The computing unit 801 may be various general-purpose and/or special-purpose processing components with processing and computing capabilities. Some examples of the computing unit 801 include, but are not limited to, a central processing unit (CPU), a graphics processing unit (GPU), various dedicated artificial intelligence (AI) computing chips, various computing units that run machine learning model algorithms, a digital signal processing (DSP), and any appropriate processor, controller, microcontroller, etc. The computing unit 801 performs the various methods and processing described above, for example, the method of determining the vehicle queuing information. For example, in some embodiments, the method of determining the vehicle queuing information may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded onto the RAM 803 and executed by the computing unit 801, one or more operations of the method of determining the vehicle queuing information described above may be performed. Alternatively, in other embodiments, the computing unit 801 may be configured to perform the method of determining the vehicle queuing information in any other suitable manner (for example, by means of firmware).

Various implementations of the systems and technologies described above in this article may be implemented in a digital electronic circuit system, an integrated circuit system, a field programmable gate array (FPGA), an application specific integrated circuit (ASIC), an application-specific standard product (ASSP), system on chip system (SOC), load programmable logic device (CPLD), computer hardware, firmware, software, and/or a combination thereof. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input device, and at least one output device, and transmit the data and instructions to the storage system, the at least one input device, and the at least one output device.

The program codes used to implement the method of the present disclosure may be written in any combination of one or more programming languages. These program codes may be provided to processors or controllers of general-purpose computers, special-purpose computers, or other programmable data processing devices, so that when the program codes are executed by the processors or controllers, functions/operations specified in the flowcharts and/or block diagrams are implemented. The program codes may be executed entirely on a machine, partly executed on a machine, partly executed on a machine and partly executed on a remote machine as an independent software package, or entirely executed on a remote machine or a server.

In the context of the present disclosure, a machine-readable medium may be a tangible medium, which may contain or store programs for being used by an instruction execution system, device, or apparatus or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination of the foregoing. More specific examples of the machine-readable storage medium would include electrical connections based on one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the foregoing.

In order to provide interaction with the user, the system and technology described here may be implemented on a computer that has: a display device for displaying information to the user (for example, a CRT (cathode ray tube) or an LCD (liquid crystal display)) monitor); and a keyboard and pointing device (for example, a mouse or a trackball) through which the user may provide input to the computer. Other types of devices may also be used to provide interaction with the user; for example, the feedback provided to the user may be sensory feedback of any form (for example, visual feedback, auditory feedback, or tactile feedback); and may receive input from the user in any form (including acoustic input, voice input, or tactile input).

The systems and technologies described here MAY be implemented in a computing system that includes back-end components (for example, as a data server), or a computing system that includes middleware components (for example, an application server), or a computing system that includes front-end components (for example, a user computer with a graphical user interface or a web browser through which the user may interact with the implementation of the system and technology described herein), or a computing system including any combination of the back-end components, the middleware components, or the front-end components. The components of the system may be connected to each other through digital data communication (for example, communication network) in any form or medium. Examples of the communication networks include: local area network (LAN), wide area network (WAN), and the Internet.

A computer system may include a client and a server. The client and server are generally far away from each other and interact through a communication network. A relationship between the client and the server is generated by running computer programs that have a client-server relationship with each other on corresponding computers.

Based on the above electronic device, the present disclosure further provides a roadside device including the electronic device described above. The roadside device may, for example, further include communication components and the like. The electronic device may be integrated with the communication components, or the electronic device may be a separate device. The electronic device may obtain data from a sensing device (such as the roadside monitor device) and perform data calculations. The acquired data may include, for example, pictures and videos, and the data calculation performed may be, for example, processing such as image recognition and target tracking on the pictures and videos.

Based on the above electronic device, the present disclosure further provides a cloud control platform including the electronic device described above. The cloud control platform may perform processing on the cloud, and the electronic device included may acquire data from a sensing device (such as monitor devices on both sides of the road) and perform data calculations. The acquired data may include, for example, pictures and videos, and the data calculation performed may be, for example, processing such as image recognition and target tracking on the pictures and videos. In some embodiments, the cloud control platform may also be called, for example, a vehicle-road collaborative management platform, an edge computing platform, a cloud computing platform, a central system, a cloud server, etc.

The above specific embodiments do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

It should be understood that the various forms of processes shown above may be used to reorder, add or delete operations. For example, the operations described in the present disclosure may be performed in parallel, sequentially, or in a different order, as long as the desired result of the technical solution disclosed in the present disclosure may be achieved, which is not limited herein.

**Claims**

1. A method of determining a vehicle queuing information, comprising:

    acquiring (S210) a plurality of images for a target lane captured at a plurality of time instants;
    for each image in the plurality of images:

        determining (S230) at least one vehicle located on the target lane and a travelling speed of each of the at least one vehicle located at the time instant at which the each image is captured;
        determining (S250) a status information of each of the at least one vehicle at the time instant at which the each image is captured according to the travelling speed of the at least one vehicle;

        determining (S270) a queuing vehicle, which is located on the target lane at a first time instant of the plurality of time instants, according to all of the status information determined for the plurality of images; and
        determining (S290) a vehicle queuing information for the target lane at the first time instant according to the queuing vehicle.

2. The method of claim 1, wherein the determining a status information of each of the at least one vehicle at the time instant at which the each image is captured comprises:

    determining at least two status combinations for the at least one vehicle, wherein each of the at least two status combinations comprises a status of each of the at least one vehicle, and the status of the at least one vehicle comprises a stationary state and a travelling state; and
    determining a target combination (350) minimizing a value of a predetermined loss function (340) in at least one status combination according to the travelling speed of each of the at least one vehicle at the time instant at which the each image is captured, to acquire the status information of each of the at least one vehicle at the time instant at which the each image is captured.

3. The method of claim 2, wherein the determining a status information of each of the at least one vehicle at the time instant at which the each image is captured further comprises:

    determining an abnormal vehicle in the at least one vehicle according to the target combination (350), wherein the abnormal vehicle includes a vehicle whose status information is different from status information of a first predetermined number of adjacent vehicles; and
    adjusting the status information of the abnormal vehicle, so that an adjusted status information of the abnormal vehicle is the same as the status information of the first predetermined number of adjacent vehicles.

4. The method of claim 2, wherein the predetermined loss function (340) is:

$$\widetilde{A_t} = \sum_{i=0}^{N_t}\big[(Q - a_t^i)\cdot v_t^i + a_t^i \cdot \tau\big],$$

wherein $\widetilde{A_t}$ is the value of the predetermined loss function (340), $a_t^i$ represents a value of a status information of an $i_{th}$ vehicle in the at least one vehicle located on the target lane at a time instant at which a $t_{th}$ image in the plurality of images is captured; $v_t^i$ represents a travelling speed of the $i_{th}$ vehicle at the time instant at which the $t_{th}$ image in the plurality of images is captured; Q and $\tau$ are constants, $N_t$ is a total number of the vehicles located on the target lane in the $t_{th}$ image; wherein the value of the status information includes Q indicating the travelling state and 0 indicating the stationary state.

5. The method of any preceding claim, wherein the determining a queuing vehicle, which is located on the target lane at a first time instant of the plurality of time instants comprises:

    determining, in the plurality of images, at least one image including each vehicle as a target image for said each vehicle;

determining a status information of said each vehicle at the first time instant as an initial status information (450), according to the status information of said each vehicle determined for the target image; and

determining the queuing vehicle in all vehicles located on the target lane in the plurality of images according to initial status information (450) of all the vehicles.

6.  The method of claim 5, wherein the determining a status information of said each vehicle at the first time instant comprises:
    determining, in a case where there are a plurality of target images for said each vehicle, a status information with a larger amount in a plurality of status information of said each vehicle determined for the target images as the status information of said each vehicle at the first time instant.

7.  The method of claim 5, wherein a status of the vehicle comprises a stationary state and a travelling state; and wherein the determining the queuing vehicle in all vehicles comprises:

    determining a time order of appearances of all the vehicles located on the target lane in the plurality of images according to the time instants at which the plurality of images are captured;
    sorting the initial status information (450) of all the vehicles in a chronological order according to the time order to acquire a status information sequence; and
    determining, in a case where the status information sequence includes a second predetermined number of consecutive travelling states, a vehicle corresponding to the initial status information (450) previous to the second predetermined number of consecutive travelling states in the status information sequence as the queuing vehicle.

8.  The method of any preceding claim, wherein:

    a time interval between the first time instant and a second time instant in the plurality of time instants is associated with a change period of a traffic signal light for the target lane and a road condition of the target lane.

9.  The method of any preceding claim, wherein the determining a vehicle queuing information for the target lane at the first time instant comprises:

    determining a vehicle body length of each queuing vehicle; and
    determining a vehicle queuing length on the target lane at the first time instant as the vehicle queuing information according to the vehicle body length of said each queuing vehicle and a predetermined vehicle distance.

10. An apparatus (700), comprising a plurality of modules configured to implement the method of any preceding claim.

11. An electronic device (800), comprising:

    at least one processor; and
    a memory communicatively connected to the at least one processor; wherein
    the memory is stored with instructions capable of being executed by the at least one processor, and the instructions are executed by the at least one processor, so that the at least one processor is capable of implementing the method of preceding claim.

12. A roadside device, comprising the electronic device of claim 11.

13. A cloud control platform, comprising the electronic device of claim 11.

14. A non-transitory computer readable storage medium stored with computer instructions, wherein the computer instructions are configured to allow a computer to implement the method of any preceding claim.

15. A computer program product, comprising a computer program/instruction, wherein the computer program/instruction is configured to implement operations of the method of any preceding claim when being executed by a processor.

FIG. 1

200

```
┌────────────────────────────────────────────────────────────────┐
│ A plurality of images for a target lane captured at a plurality │     ┌─ S210
│ of time instants are acquired                                   │
└────────────────────────────────────────────────────────────────┘
                               │
                               ▼
┌────────────────────────────────────────────────────────────────┐
│ For each image in the plurality of images, at least one vehicle │     ┌─ S230
│ located on the target lane and travelling speed of the at least │
│ one vehicle at the time instant at which the each image is      │
│ captured are determined                                         │
└────────────────────────────────────────────────────────────────┘
                               │
                               ▼
┌────────────────────────────────────────────────────────────────┐
│ Status information of the at least one vehicle at the time      │     ┌─ S250
│ instant at which the each image is captured is determined       │
│ according to the travelling speed of the at least one vehicle   │
└────────────────────────────────────────────────────────────────┘
                               │
                               ▼
┌────────────────────────────────────────────────────────────────┐
│ A queuing vehicle, which is located on the target lane at a     │     ┌─ S270
│ first time instant of the plurality of time instants, is        │
│ determined according to all of the status information determined│
│ for the plurality of images                                     │
└────────────────────────────────────────────────────────────────┘
                               │
                               ▼
┌────────────────────────────────────────────────────────────────┐
│ A vehicle queuing information for the target lane at the first  │     ┌─ S290
│ time instant is determined according to the queuing vehicle     │
└────────────────────────────────────────────────────────────────┘
```

FIG. 2

300

FIG. 3

400

FIG. 4

500

511 512 513 514 515 516

521 522 523 524 525 526

| Stationary state | Stationary state | Travelling state | Stationary state | Travelling state | Travelling state |

530

{0, 0, 1, 0, 1, 1}

540

511 512 513 514

FIG. 5

FIG. 6

700

Image acquisition module 〜710

Lane vehicle determination module 〜730

Status information determination module 〜750

Queuing vehicle determination module 〜770

Queuing information determination module 〜790

FIG. 7

800

Computing unit ⌒801

ROM ⌒802

RAM ⌒803

⌒804

⌒805

I/O interface

Input unit ⌒806

Output unit ⌒807

Storage unit ⌒808

Communic- ation unit ⌒809

FIG. 8

Europäisches
Patentamt

European
Patent Office

Office européen
des brevets

# EUROPEAN SEARCH REPORT

Application Number

EP 21 20 7120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/189218 A1 (NEC CORP [JP]) 3 October 2019 (2019-10-03) * paragraph [0034] – paragraph [0079] * | 1–15 | INV.<br>G08G1/017<br>G08G1/052 |
| X,P | & US 2021/012653 A1 (YUSA MICHIHIKO [JP]) 14 January 2021 (2021-01-14) * paragraph [0034] – paragraph [0079] *<br>----- | 1,10,11,<br>14,15 | G08G1/08<br>G08G1/01<br>G08G1/065<br>H04L67/12 |

TECHNICAL FIELDS
SEARCHED        (IPC)

G08G
H04L

The present search report has been drawn up for all claims

| Place of search | Date of completion of the search | Examiner |
|---|---|---|
| The Hague | 22 February 2022 | Mavridis, Theodoros |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 7120

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2022

| Patent document cited in search report | Publication date | Patent family member(s) | Publication date |
|---|---|---|---|
| WO 2019189218 A1 | 03-10-2019 | JP WO2019189218 A1<br>US 2021012653 A1<br>WO 2019189218 A1 | 25-02-2021<br>14-01-2021<br>03-10-2019 |

For more details about this annex : see Official Journal of the European Patent Office, No. 12/82